# EUROPÄISCHE PATENTSCHRIFT

(11) **EP 1 586 531 B1**
(45) Veröffentlichungstag und Bekanntmachung des Hinweises auf die Patenterteilung: **02.01.2013**
(21) Anmeldenummer: 05007761.9
(22) Anmeldetag: 08.04.2005
(51) Int. Cl.: B66F 9/075, B62D 27/04, B62D 33/06, B60G 99/00

(54) **Flurförderfahrzeug**
Industrial truck
Chariot de manutention

(30) Priorität: 16.04.2004 DE 102004018646
(43) Veröffentlichungstag der Anmeldung: 19.10.2005
(73) Patentinhaber: Liebherr-Werk Nenzing GmbH, 6710 Nenzing (AT)
(72) Erfinder: Mietschnig, Walter, 6708 Brand Vorarlberg (AT)
(74) Vertreter: Laufhütte, Dieter

(56) Entgegenhaltungen:
- EP-A- 0 833 012
- FR-A- 1 558 324
- GB-A- 847 555
- GB-A- 2 291 384
- US-A- 3 836 025
- US-A- 3 917 016
- US-A- 4 161 992

## Beschreibung

Die Erfindung betrifft Flurförderfahrzeuge nach dem Oberbegriff des Anspruchs 1.

Derartige Flurförderfahrzeuge sind beispielsweise Telelader, wie insbesondere Reachstacker. Reachstacker sind gummibereifte, mit Dieselmotor und Fahrerkabine ausgestattete Fahrzeuge, ähnlich einem eingefahrenen Autokran. Sie können Container transportieren und stapeln. Derartige Reachstacker sind mit einem am Teleskoparm fest verbundenen Container-Spreader ausgestattet. Bei dem bekannten Reachstacker sind die Fahrerkabinen auf dem Fahrzeug im hinteren Teil fest oder beweglich mit dem Rahmen verbunden angeordnet. Der Motor und die zugehörigen Aggregate sind in einem Tragrahmen aufgehängt.

Flurfahrzeuge, wie die vorgenannten Reachstacker weisen in der Regel hohe Vibrationen im Chassis bzw. in der Fahrerkabine auf. Aufgrund hoher Achslasten, die durch die vom Flurförderfahrzeug aufzunehmenden Last bedingt ist, ist eine starre Achsanbindung an den Tragrahmen unumgänglich. Die einzigen Feder- und Dämpfungselemente stellen im Grunde die Reifen dar, im Fall des Reachstackers die Gummireifen. Durch Fahrbahnunebenheiten wie auch Anregungen durch die Arbeitsausrüstung bzw. die Last werden Schwingungen und Vibrationen ausgelöst, die sich auf die Kabine übertragen. Hierdurch wird der Fahrkomfort empfindlich beeinträchtigt. Es wurde zwar versucht, die Kabine elastisch auf dem Tragrahmen anzuordnen. Trotz dieser elastischen Lagerung werden die Schwingungen auf die Kabine übertragen, so dass der Fahrkomfort kaum merklich verbessert wird.

US 3 836 025 A offenbart ein Flurförderfahrzeug gemäß dem Oberbegriff des Anspruchs 1 der vorliegenden Erfindung.

GB 847 555 A offenbart einen Schlepper mit einer starren Vorderachse, einer starren Hinterachse und einem die beiden Achsen miteinander verbindenden Rahmen. Der Schlepper weist des Weiteren einen Tragrahmen auf, der das Antriebsaggregat aufnimmt und gegenüber dem Fahrgestellrahmen abgefedert ist. Der Tragrahmen ist oberhalb des Fahrgestellrahmens montiert.

Aufgabe der Erfindung ist es, gattungsgemäße Flurförderfahrzeuge derart weiterzubilden, dass die auf die Fahrerkabine übertragenen Schwingungen merklich reduziert werden, so dass der Fahrkomfort wesentlich verbessert wird.

Entsprechend der erfindungsgemäßen Lösung weist ein Flurförderfahrzeug nach dem Oberbegriff des Anspruchs 1 zusätzlich die kennzeichnenden Merkmale des Anspruchs 1 auf. Demnach wird ein Flurförderfahrzeug mit starr an einem Tragrahmen angeordneten Achsen, einer Fahrerkabine und einer Reihe von Aggregaten und Aggregatzusatzteilen, wie einem Motor, Pumpen, Kühler Hydraulik- und/oder Kraftstofftank, derart weitergebildet, dass die Fahrerkabine auf einer seite einer gemeinsamen Ramenkonstruktion und die Aggregate mit Aggregatzusatzeilen auf der anderen Seite der gemeinsamen Ramenkonstruktion montiert sind und dass die gemeinsame Rahmenkonstruktion von dem Tragrahmen, mit dem sie verbunden ist, entkoppelt ist, d. h. über elastische Elemente mit diesem verbunden ist, und unterhalb des Tragrahmens montiert ist.

Durch diese Konstruktionsmethode wird erreicht, dass das Gesamtgewicht der schwingenden Massen, sich nicht nur - wie herkömmlich - auf die Kabine, sondern zusätzlich auch auf sämtliche Aggregate und Aggregatzusatzteile bezieht. Hierdurch wird die Eigenfrequenz gesenkt, die Vibrationen und Anregungen im Bereich der Sitzeigenfrequenz werden optimal gedämpft. Darüber hinaus wird der Geräuschpegel reduziert und somit der Fahrkomfort erhöht.

Besondere Ausgestaltungen der Erfindung ergeben sich aus den sich an den Hauptanspruch anschließenden Unteransprüchen.

Demnach ist die Rahmenkonstruktion von dem Tragrahmen vorteilhaft über Schwing- und/oder Dämpfungselemente entkoppelt.

Die Aggregate und Aggregatzusatzteile sind selbst elastisch entkoppelt auf der Rahmenstruktur angeordnet. Hierdurch wird die Übertragung der Eigenschwingung des Aggregates, beispielsweise des Dieschmotors oder der Pumpen auf die Rahmenstruktur minimiert.

Gemäß einer weiteren Ausgestaltung der Erfindung kann auch die Fahrzeugkabine selbst nochmals elastisch entkoppelt auf der Rahmenstruktur angeordnet sein.

Die Achsen können zwar starr, aber starr pendelnd an den Tragrahmen angebaut sein.

Vorteilhaft ist das Flurförderfahrzeug als Telelader, vorzugsweise Reachstacker, mit einem auf dem Tragrahmen verschwenkbar angeordneten Teleskopausleger mit einem Lastaufnahmemittel ausgeführt.

Weitere Merkmale, Einzelheiten und Vorteile der Erfindung werden anhand eines in der Zeichnung dargestellten Ausführungsbeispiels erläutert. Es zeigen:
- Fig. 1:: eine schematische Prinzipseitenansicht eines Flurförderfahrzeuges und
- Fig. 2:: einen Schnitt entlang der Schnittlinie A - A gemäß Fig. 1.

In den Figuren ist schematisch ein Flurförderfahrzeug dargestellt, das beispielsweise ein Reachstacker sein kann. Hier sind aus Vereinfachungsgründen der Teleskopausleger mit Lastaufnahmemittel und eine detaillierte Darstellung der sonstigen Einzelteile des Reachstackers weggelassen. Das Flurförderfahrzeug 10 weist zunächst einen zentralen Tragrahmen 12 auf, an welchem die Radachsen 14 bzw. 16 starr pendelnd oder nicht pendelnd angebaut sind. Auf dem Tragrahmen 12 ist auch der hier nicht näher dargestellte Teleskopausleger mit Lastaufnahmemittel angeordnet.

Gemäß der hier vorliegenden Erfindung sind weitere Teile des Flurförderfahrzeuges 10, nämlich eine Fahrerkabine 18 und Aggregate mit Aggregatzusatzteilen 20, die hier nur schematisch als Gesamtheit dargestellt sind, auf einer Rahmenkonstruktion 22 angeordnet.

Die Rahmenkonstruktion 22 ist über Feder-/Dämpferelemente 24 elastisch von dem zentralen Tragrahmen 12 entkoppelt.

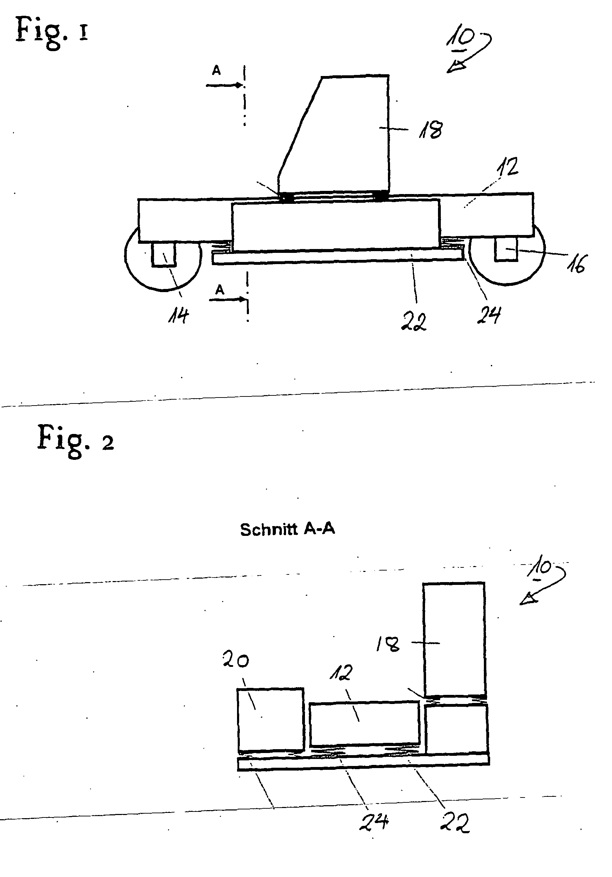

Entsprechend Fig. 2 ist zu erkennen, dass der Tragrahmen 12 mittig und zentral angeordnet ist, während die Rahmenkonstruktion auf einer Seite die Fahrerkabine 18 und auf der anderen Seite die Aggregatteile und Aggregatzusatzteile 20 aufweist. Zu Aggregatteilen bzw. Aggregatzusatzteilen gehören beispielsweise der Dieselmotor, Pumpen, Kühler, Hydrauliktanks und der Dieseltank.

Durch Anordnung der Fahrerkabine 18 und der Aggregat bzw. Aggregatzusatzteile 20 auf der Rahmenkonstruktion 24 wird die elastisch mit dem Tragrahmen 12 verbundene Masse erhöht, wodurch die Schwingungseigenfrequenz erheblich gesenkt wird und entsprechende Vibrationen und Anregungen im Bereich der Sitzeigenfrequenz reduziert werden. Hierdurch wird der Fahrkomfort für den Fahrer des Flurförderfahrzeugs wesentlich verbessert. Darüber hinaus werden die vergleichsweise hohen Schwingungen, die für Geräuschemissionen verantwortlich sind, gedämpft. Dies führt zu einer Reduzierung des Geräuschpegels beim Betrieb des Flurförderfahrzeuges.

Im hier dargestellten Auführungsbeispiel sind sowohl die Fahrkabine 18 einerseits wie auch die Aggregate und Aggregatzusatzteile 20 selbst nochmals über Schwingungselemente elastisch auf der Rahmenkonstruktion angeordnet. Dadurch wird eine Übertragung der Schwingungen beispielsweise des Dieselmotors oder der Pumpen auf die Rahmenkonstruktion wirksam verhindert. Auch entsprechende Schwingungen aus der Fahrerkabine werden nicht unmittelbar auf die Rahmenkonstruktion übertragen und umgekehrt. Durch die entsprechende Auswahl der Feder-/Dämpfungseigenschaften der Schwingelemente kann eine optimale Schwingungsdämpfung erreicht werden.

## Patentansprüche

1. Flurförderfahrzeug (10) mit starr an einem Tragrahmen (12) angeordneten Achsen (14, 16), einer Fahrerkabine (18) und einer Reihe von Aggregaten und Aggregatzusatzteilen (20), wie einem Motor, Pumpen, Kühler, Hydraulik-, und/oder Kraftstofftank,
**dadurch gekennzeichnet,**
**dass** die Fahrerkabine (18) auf einer Seite einer gemeinsamen Rahmenkonstruktion (22) und die Aggregate mit Aggregatzusatzteilen (20) auf der anderen Seite der gemeinsamen Rahmenkonstruktion (22) montiert sind, und
**dass** die gemeinsame Rahmenkonstruktion (22) von dem Tragrahmen (12) entkoppelt ist und unterhalb des Tragrahmens (12) montiert ist.

2. Flurförderfahrzeug (10) nach Anspruch 1, **dadurch gekennzeichnet, dass** die Rahmenkonstruktion (22) von dem Tragrahmen (12) über Schwing- und/oder Dämpfungselemente entkoppelt ist

3. Flurförderfahrzeug (10) nach Anspruch 1 oder 2, **dadurch gekennzeichnet, dass** die Aggregate und Aggregatzusatzteile (20) elastisch entkoppelt auf der Rahmenstruktur (22) angeordnet sind.

4. Flurförderfahrzeug (10) nach einem der Ansprüche 1 bis 3, **dadurch gekennzeichnet, dass** die Fahrzeugkabine (18) elastisch entkoppelt auf der Rahmenstruktur (22) angeordnet ist.

5. Flurförderfahrzeug (10) nach einem der Ansprüche 1 bis 4, **dadurch gekennzeichnet, dass** die Achsen (14, 16) starr pendelnd an dem Tragrahmen (12) angebaut sind.

6. Flurförderfahrzeug (10) nach einem der Ansprüche 1 bis 5, **dadurch gekennzeichnet, dass** es als Telelader, vorzugsweise Reachstacker, mit einem auf dem Tragrahmen (12) verschwenkbar angeordneten Teleskopausleger mit einem Lastaufnahmemittel ausgeführt ist.

## Claims

1. A mobile conveying vehicle (10) comprising axles (14, 16) rigidly arranged on a support frame (12), an operator's cabin (18) and a series of units and additional unit parts (20) such as an engine, pumps, a radiator, hydraulic tank and/or fuel tank,
**characterized in that**
the operator's cabin (18) is mounted on a side of a common frame construction (22) and the units with the additional unit parts (20) are mounted on the other side of a common frame construction (22), and
the common frame construction (22) is uncoupled from the support frame (12) and is mounted below the support frame (12).

2. A mobile conveying vehicle (10) in accordance with claim 1, wherein the frame construction (22) is uncoupled from the support frame (12) via vibration elements and/or damping elements.

3. A mobile conveying vehicle (10) in accordance with either of claims 1 or 2, wherein the units and the additional unit parts (20) are arranged on the frame structure (22) in a resiliently uncoupled manner.

4. A mobile conveying vehicle (10) in accordance with any one of claims 1 to 3, wherein the operator's cabin (18) is arranged on the frame structure (12) in a resiliently uncoupled manner.

5. A mobile conveying vehicle (10) in accordance with any one of claims 1 to 4, wherein the axles (14, 16) are installed on the support frame (12) in a rigidly floating manner.

6. A mobile conveying vehicle (10) in accordance with any one of claims 1 to 5, wherein it is made as a telescopic loader, preferably as a reach stacker, comprising a telescopic boom pivotably arranged on the support frame (12) with a load receiving means.

## Revendications

1. Chariot de manutention (10) avec des essieux (14, 16) disposés rigidement à un châssis de support (12), une cabine de conducteur (18) et une rangée d'agrégats et de pièces complémentaires d'agrégats (20), comme un moteur, des pompes, refroidisseurs, réservoir hydraulique et/ou de carburant,
**caractérisé en ce que** la cabine de conducteur (18) est montée sur un côté d'une construction de châssis commune (22) et les agrégats avec les pièces complémentaires d'agrégats (20) sont montés sur l'autre côté de la construction de châssis commune (22), et
**en ce que** la construction de châssis commune (22) est découplée du châssis de support (12) et est montée en dessous du châssis de support (12).

2. Chariot de manutention (10) selon la revendication 1, **caractérisé en ce que** la construction de châssis (22) est découplée du châssis de support (12) par des éléments d'oscillation et/ou d'amortissement.

3. Chariot de manutention (10) selon la revendication 1 ou 2, **caractérisé en ce que** les agrégats et les pièces complémentaires d'agrégats (20) sont disposé, d'une manière élastiquement découplée, sur la structure de châssis (22).

4. Chariot de manutention (10) selon l'une des revendications 1 à 3, **caractérisé en ce que** la cabine de conducteur (18) est disposée, d'une manière élastiquement découplée, sur la structure de châssis (22).

5. Chariot de manutention (10) selon l'une des revendications 1 à 4, **caractérisé en ce que** les essieux (14, 16) sont montés d'une manière rigidement pendulaire au châssis de support (12).

6. Chariot de manutention (10) selon l'une des revendications 1 à 5, **caractérisé en ce que** celui-ci est réalisé comme chargeur télescopique, de préférence comme reach stacker, avec une flèche télescopique disposée d'une manière pivotante sur le châssis de support (12), avec un moyen de réception de charge.
